(19) Europäisches Patentamt
European Patent Office
Office européen des brevets

(11) **EP 3 146 237 B1**

(12) **EUROPEAN PATENT SPECIFICATION**

(45) Date of publication and mention
of the grant of the patent:
**22.08.2018 Bulletin 2018/34**

(21) Application number: **15733361.8**

(22) Date of filing: **22.05.2015**

(51) Int Cl.:
**F16G 5/16** $^{(2006.01)}$

(86) International application number:
**PCT/EP2015/061478**

(87) International publication number:
**WO 2015/177372 (26.11.2015 Gazette 2015/47)**

(54) **DRIVE BELT FOR A CONTINUOUSLY VARIABLE TRANSMISSION WITH GENERALLY V-SHAPED TRANSVERSE MEMBERS**

ANTRIEBSRIEMEN FÜR EIN STUFENLOSES GETRIEBE MIT IM ALLGEMEINEN V-FÖRMIGEN QUERELEMENTEN

COURROIE D'ENTRAÎNEMENT POUR UNE TRANSMISSION À VARIATION CONTINUE COMPRENANT DES ÉLÉMENTS TRANSVERSAUX GÉNÉRALEMENT EN FORME DE V

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2014 NL 1040811**

(43) Date of publication of application:
**29.03.2017 Bulletin 2017/13**

(73) Proprietor: **Robert Bosch GmbH
70442 Stuttgart (DE)**

(72) Inventors:
• **VAN TREIJEN, Adrianus Antonius Jacobus Maria
NL-4811 VS Breda (NL)**
• **VAN DER MEER, Cornelis Johannes Maria
NL-5032 XG Tilburg (NL)**
• **BRANDSMA, Arjen
NL-5045 WN Tilburg (NL)**

(74) Representative: **Plevier, Gabriel Anton Johan Maria
Bosch Transmission Technology B.V.
IP section (GS-CT/NE)
postbus 500
5000 AM Tilburg (NL)**

(56) References cited:
**JP-A- S58 109 748     JP-A- 2002 195 352**

**Description**

The present disclosure relates to a drive belt for a continuously variable transmission with two pulleys for accommodating the drive belt between the, at least partly conical pulley sheaves thereof. The known drive belt comprises an endless, i.e. ring-shaped carrier that is composed of at least one, but typically of a set of nested, flexible rings and a number of transverse members that together form an essentially contiguous row along the circumference of the endless carrier. Typically both the said flexible rings and the transverse members of the drive belt are made of metal, in particular steel.

The transverse members each include a predominantly width-wise, i.e. axially relative to the drive belt's circumference direction, extending base part with an, at least effectively, trapezoidal outline and two pillar parts that extend from a respective axial side of the base part in a direction essentially perpendicular to the aforementioned axial and circumference directions of the drive belt, i.e. in radial direction. Each transverse member thus defines a centrally located opening between the pillar parts and the base part thereof, wherein a small circumferential section of the endless carrier is accommodated. The base part and the pillar parts are integral parts of the known transverse member. Such a drive belt with effectively V-shaped transverse members is known from, for example, the European patent publication No. EP-1219860-A, in particular figure 6 thereof.

In the base part of the transverse members, on a front main surface thereof, a so-called tilting zone is provided. The tilting zone is an axially extending transition between a radially outer section of the transverse member of essentially constant thickness, i.e. dimension in the said circumferential direction, and an radially inner section thereof that, at least effectively, tapers in radial inward direction. Such tilting zone and tapered inner section of the transverse member allow adjacent transverse members to mutually tilt in a curved trajectory part of the drive belt in the transmission, while these adjacent transverse members remain in physical contact through, at least, an axially oriented line of contact located in the tilting zone. It is noted that a ratio between respective radial positions of the tilting edge at the two transmission pulleys determines the (rotational) speed ratio between the pulleys and (thus) of the transmission.

Further, in the pillar parts of the transverse members, projections is provided that protrude from the front main surface essentially in the said circumferential direction. In the drive belt, each projection is inserted in a recess provided in an opposite, i.e. rear main surface of an adjacent transverse member in the drive belt. Such projection and recess serve to prevent, or at least limit, a relative movement between adjacent transverse members in the row of transverse members of the drive belt, at least in radial direction, but typically also in axial direction.

On either axial side of the base part thereof, the transverse member is provided with contact surfaces for frictionally engaging a pulley sheave of the transmission pulleys. These pulley contact surfaces are mutually oriented at an angle, denoted the belt angle, that matches, at least by approximation, an angle defined by and between the conical pulley sheaves of the pulleys, which latter angle is denoted the pulley angle. Furthermore, these pulley contact surfaces are either corrugated or provided with a substantial surface roughness, such that only the peaks of the corrugation profile or surface roughness arrive in contact with the pulley sheave. This particular feature provides that cooling oil that is applied in the known transmission can be accommodated in the valleys of the said corrugation profile or surface roughness, thus improving the friction between the drive belt and the transmission pulleys.

During operation in the transmission, the transverse members of the drive belt that are located between the pulley sheaves of a driving pulley of the transmission are driven in the direction of rotation thereof by friction forces being exerted by these pulley sheaves on the pulley contact surfaces of these transverse members. These latter, driven transverse members push preceding transverse members along the circumference of the endless carrier of the drive belt and, ultimately, rotationally drive the driven pulley of the transmission, again by friction. In order to generate such friction (force) between the transverse members and the pulley sheaves of the transmission pulleys to build up, the pulley sheaves of a pulley are forced towards one another in axial direction, whereby these exert mutually opposed pinching force on the transverse members in the axial direction thereof.

According to EP-1219860-A it must be prevented that the transverse members can separate from the endless carrier, in particular in a straight section of the drive belt located in between the transmission pulleys. For this particular purpose several solutions have been proposed in the art. For example EP-0014013-A and JP2002-195352A teach to design the pillar parts of the transverse members with hook parts that extend in axial direction over a respective axial side of the endless carrier, whereas many other documents such as EP-0026534-A, JP-2138533(B) and US-4604082(A) teach to provide means for closing the opening between the pillar parts and the base part after the endless carrier has been inserted therein. To the contrary, according to EP-1219860-A a solution is found in the height, i.e. the radial extent of the pillar parts relative to the base part of the transverse members, which height is not related to the (radial) thickness of the endless carrier but rather to a clearance or play between the transverse members in the circumference direction of the drive belt. Finally, JP S58-109748 teaches a design of the transverse members with only one hook part, i.e. only one of the two pillar parts is provided with a hook part extending in axial direction over a respective axial side of the endless carrier. However in this case, two types of such transverse members are include in the drive belt, each such type having the hook part associated with a different one of the two pillar parts of the transverse member, such that in the drive belt both axial sides of the endless carrier are constrained in the radial direction relative to the row of transverse members of the drive belt.

The known solution of JP S58-109748 provides for a relatively convenient assembling of the drive belt, by consecutively mounting the transverse members onto the endless carrier by first inserting the endless carrier between the base part and the hook part of a transverse member, while the latter is in a orientation that is rotated relative to the endless carrier and then rotating the respective transverse member relative to the endless carrier to bring these into the proper relative alignment thereof. However, JP S58-109748 remains silent on the dimensions of, in particular, the hook part and/or on how to determine these in relation to other dimensions of the transverse members and endless carrier components of the drive belt.

It is an object of the present disclosure to provide for a novel design of the drive belt that allows the drive belt to be assembled relatively easily, while providing both of the pillar parts of the transverse members with the hook part.

The drive belt according to the present disclosure is defined in the set of claims that is attached hereto. Furthermore, the subject matter of the present disclosure is explained hereinafter by way of example on the basis of the description below with reference to the drawing, in which:

- figure 1 is a simplified and schematic side elevation of a transmission with two pulleys and a drive belt;
- figure 2 illustrates the known drive belt with generally V-shaped transverse members in a cross-section thereof facing in its circumference direction and also includes a separate side elevation of only the transverse member thereof;
- figure 3 illustrates another, known embodiment of the generally V-shaped transverse member of the known drive belt in a front and a side elevation thereof;
- figure 4 shows two types of transverse members according to the present disclosure;
- figure 5 shows the two types of transverse members according to figure 4 as incorporated in the drive belt; and
- figure 6 represents a schematised version of figure 5, wherein several dimensions of the drive belt are indicated.

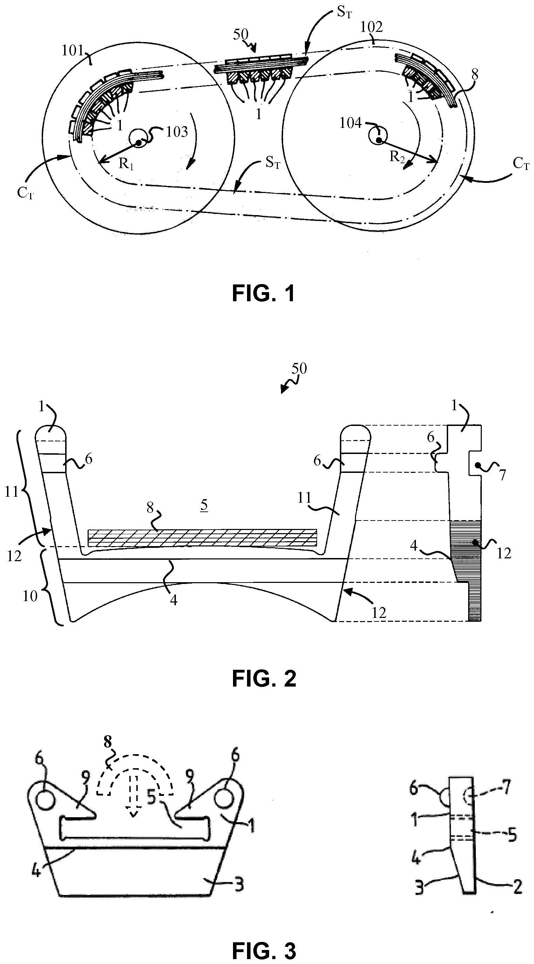

Figure 1 schematically shows the central parts of a continuously variable transmission for use in a driveline of, for example, passenger motor vehicles. This transmission is well-known per se and comprises at least a first variable pulley 101 and a second variable pulley 102. In the driveline, the first pulley 101 is coupled to and driven by an engine and the second pulley 102 is typically coupled to driven wheels of the motor vehicle via a number of gears.

Both transmission pulleys 101, 102 comprise a first conical pulley sheave that is fixed to a pulley shaft 103, 104 of the respective pulley 101, 102 and a second conical pulley sheave that is axially displaceable relative to the respective pulley shaft 103, 104 and that is fixed thereto only in rotational direction. A drive belt 50 of the transmission is wrapped around the pulleys 101, 102, while being accommodated between the pulley sheaves thereof. As appears from figure 1, the trajectory of the drive belt 50 in the transmission includes two straight sections $S_T$ and two curved sections $C_T$ where the drive belt 50 is curved around a respective one of the two transmission pulleys 101, 102.

During operation of the transmission, the drive belt 50 is pinched by and between the pulley sheaves of both pulleys 101, 102 and thus provides a rotational connection there between by means of friction. To this end, electronically controllable and hydraulically acting movement means that act on the respective moveable pulley sheave of each pulley 101, 102 are provided in the transmission (not shown). In addition to exerting a pinching force on the drive belt 50, these movement means also control respective radial positions R1 and R2 of the drive belt at the pulleys 101, 102 and, hence, the speed ratio that is provided by the transmission between the pulley shafts 103, 104 thereof.

The known drive belt 50 is composed of an endless carrier 8 and a plurality of transverse members 1 that are mounted on the endless carrier 8 along the circumference thereof in an, at least essentially, contiguous row. In the drive belt 50 the transverse members 1 are movable along the circumference of the endless carrier 8, which endless carrier 8 is typically composed of a number of flexible metal rings or bands, which metal bands are stacked one around one another, i.e. are mutually nested.

In figure 2 the drive belt 50 is illustrated in one of many known embodiments thereof. On the left side of figure 2 the drive belt 50 is shown in cross-section and on the right side of figure 2 a side elevation of the drive belt 50 is included. From figure 2 it appears that the transverse members 1 of the drive belt 50 are generally shaped similar to the letter "V", i.e. are generally V-shaped, whereby an angle between the sides of the transverse members 1 is design to closely match an angle present between the conical pulley sheaves of the transmission pulleys 101, 102.

The transverse member 1 comprises a base parts 10 and two pillar parts 11, whereof the base part 10 extends in the axial direction of the drive belt 50 and whereof the pillar parts 11 extend in the radial direction of the drive belt 50, each from a respective axial side of the base part 10. In its thickness direction, the transverse member 1 extends between a front main face 3 and a rear main face 4 thereof that are both oriented, at least generally, in the circumference direction of the drive belt 50. Between the pillar parts 11 and the base part 10 of the transverse member an opening 5 is defined, wherein a small circumferential section of the endless carrier 8 is accommodated.

In the base part 10 of the transverse member 1 a so-called tilting zone 4 is provided in its front main face 3. This tilting zone 4 represents an axially extending transition between a radially outer section of the transverse member of essentially constant thickness and a radially inner section thereof that is tapered in radial inward direction. Typically, the tilting zone 4 is smoothly, convexly curved. When adjacent transverse members 1 are tilted relative to one another in the curved section $C_T$ of the drive belt 50, these (can) remain in contact at the location of the tilting zone 4.

In each pillar part 11 of the transverse member 1 a projection 6 is provided that protrudes from the front main surface 3 in, essentially, the said circumference direction. In the drive belt 50, the projection 6 is inserted in a recess 7 provided in the opposite, i.e. rear main face 3 of an adjacent transverse member 1 to limit a relative movement between the adjacent transverse members 1.

On the axial sides thereof, the transverse member 1 is provided with contact surfaces 12 for contacting (the pulley sheaves of) the transmission pulleys 101, 102.

In order to prevent that the transverse members 1 of the known drive belt 50 can separate from the endless carrier 8 thereof, in particular in a straight section $S_T$ thereof, the pillar parts 11 are provided with a defined, minimum height or radial extent relative to the base part 10 of the transverse members 1.

For the above purpose it is also known to instead provide the pillar parts 11 of the transverse members 1 with hook parts 9 that in axial direction hang over a part of the opening 5. This particular known design of the transverse member 1 is illustrated in figure 8. These hook parts 9 engage the axial sides of the endless carrier 8 to prevent the separation of the transverse member 1 in radial inward direction relative to the endless carrier 8.

Although in particular this latter known design of the transverse member 1 is frequently mentioned in the art, it requires that the endless carrier 8 is deformed to a considerable extent during assembling, as indicated in figure 3 by the dashed outline 8 and the arrow. Thus, depending on an amount of overhang of the hook parts 9 over the opening 5, the assembling of the drive belt 50 is increasingly hampered and/or complicated. However, if the extent of the hook parts 9 in axial direction, i.e. the overhang thereof, is too small, the transverse members 1 can separate from the endless carrier 8 during operation.

To facilitate the assembly of the drive belt 50 it has also been proposed in the art to include two types I, II of transverse members 1 in the drive belt 50, with the transverse members 1 of each type I, II being provided with only one pillar part 11 defining a hook part 13, which one pillar part 11 with the hook part 13 is located on opposite axial sides of the transverse members 1 of the said two types I, II.

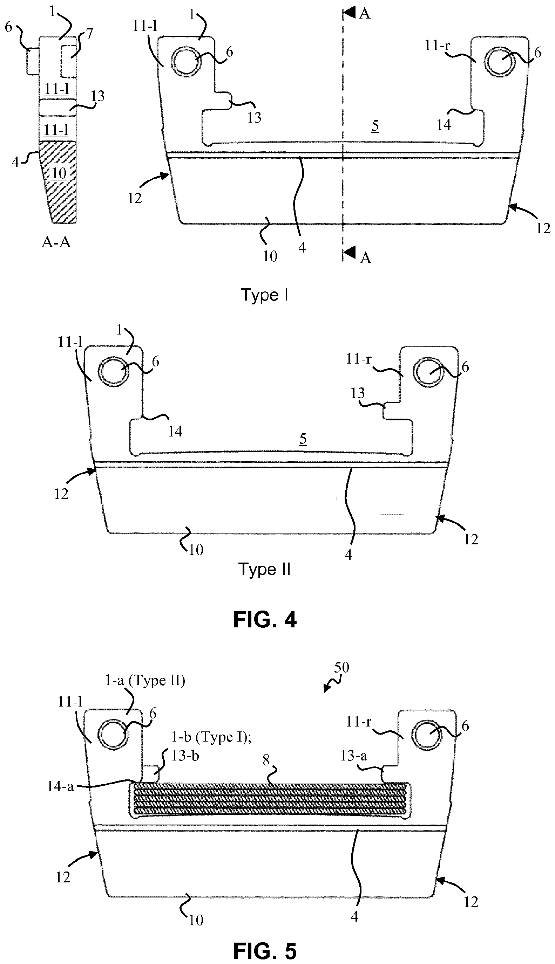

Figure 4 provides a possible embodiment of the two types I, II of transverse members 1. The transverse member 1 of a first type I, which is depicted in figure 4 both in front elevation and in cross-section A-A, is provided with a left-side pillar part 11-1 with a hook part 13 that is considerably larger than the hook part 14 of the opposite, i.e. right-side pillar part 11-r. Thus the hook part 13 of the left-side pillar part 11-1 of the transverse members 1 of the first type I thus extends farther in axial direction than the hook part 14 of the right-side pillar part 11-r thereof. In accordance with the present disclosure, the transverse member 1 of a second type II, which is depicted in figure 4 in front elevation only, is -to the contrary- provided with a left-side pillar part 11-1 with a hook part 14 that is considerably smaller than the hook part 13 of the right-side pillar part 11-r.

In figure 5 a drive belt 50 including both types I, II of transverse members 1 is shown in a cross-section thereof similar to the cross-section of the known drive belt 2 in figure 2. Of one transverse member 1-a the complete outer contour is visible in figure 5, which particular transverse member 1-a lies in front of a subsequent transverse member 1-b in the drive belt 50, whereof only the larger hook part 13-b is visible. Thus the transverse member 1-a lying in front in figure 5 and having its larger hook part 13-a associated with its right-side pillar part 11-r corresponds to the type II transverse member 1 of figure 4, whereas the other, i.e. subsequent transverse member 1-b in figure 5 that has its larger hook part 13-a associated with its left-side pillar part 11-1 corresponds to the type I transverse member 1 of figure 4. From this figure 5 it clearly appears that the width-wise or axial distance between the larger hook parts 13-a, 13b of two subsequent transverse members 1 of mutually different type I, II, as incorporated in the drive belt 50, is considerably smaller than the axial distance of the hook parts 13, 14 of each individual transverse members 1. As a result the individual transverse members 1 can be mounted on the endless carrier 8 with relative ease. However, once the drive belt is completely assembled, it is effectively prevented that the transverse members 1 can separate from the endless carrier 8 in radial inward direction by the larger hook parts 13 of both types I, II of work transverse members 1 and the projections 6 and recess 7 of the pairs of adjacent transverse members 1 in the drive belt 50 working together.

To optimally distribute the contact between the endless carrier 8 and the said two types I, II of transverse members 1 these are incorporated in the drive belt 50 in a mutually alternating pattern.

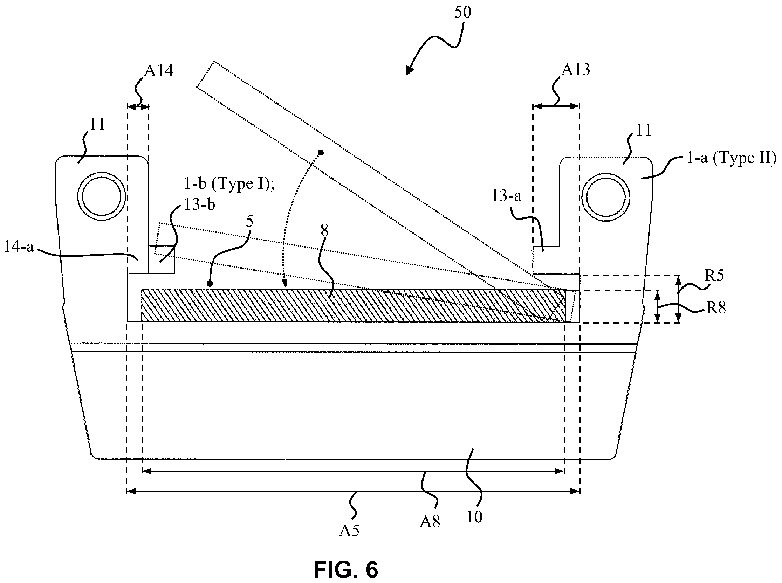

In figure 6 the drive belt 50 depicted in figure 5 is show again, however, in a schematised manner and not to scale. In particular, the real, rounded-off shapes of the endless carrier 8 and of the central opening 5 of the transverse members 1 are approximated by rectangles and the play of the endless carrier 8 in the opening 5, relative to the transverse members in axial and in radial has been exaggerated. Furthermore, in figure 6, the dotted outlines illustrate the relative movement of the transverse member 1-a and the endless carrier 8 during drive belt 50 assembly.

With the dimensions of figure 6, the mounting of the transverse members 1 is unproblematic. However in practice the radial play and the axial play of the endless carrier 8 relative to the in the opening 5 is preferably chosen much smaller than indicated in the figures, whereby the axial extent of the hook part 13, or of the hook parts 13, 14 become(s) much more critical. In fact, according to the present disclosure an optimum exists in this respect.

According to the present disclosure the dimensions of:

- the radial extent (height) R5 of the opening 5;
- the axial extent (width) A5 of the opening 5;
- the radial extent R8 of the endless carrier 8;
- the axial A8 of the endless carrier 8; and
- the axial extent A13 of the largest or only hook part 13 should satisfy at least the following relationships:

$$A13 > A5-A8 \hspace{4cm} (1)$$

$$A13 < A5-(A8*R8/R5) \hspace{3cm} (2)$$

With these two equations (1) and (2) the optimum axial extent of the hook part 13 is found in dependency on the radial play between the endless carrier 8 and such hook part 13.

In practice it may be preferable to apply a safety margin to the axial extent A13 of the largest or only hook part 13, preferably of at least 10%, more preferably of at least 25%.

If the second, smaller hook part 14 is applied as well, the axial extent A14 thereof should be smaller than half the axial play between the endless carrier 8 and the opening 5 of the transverse members 1:

$$A14 < 0.5*(A5-A8) \hspace{3cm} (3)$$

In this latter case, the accuracy of the equations (1) and (2) can in principle be improved as follows:

$$A13 > (A5-A14)-A8 \hspace{3cm} (4)$$

$$A13 < (A5-A14)-(A8*R8/R5) \hspace{2cm} (5)$$

The radial play and the axial play of the endless carrier 8 located in the opening 5 and relative to the transverse members 1 are normally defined by the application of the drive belt 50 and will in practice have a value in the range of 0.5 to 1.0 mm for the axial play and in the range of 0.1 to 0.25 mm for the radial play.

Apart from the design of the left and right-side pillar parts 11-1, 11-r and, more in particular, of the respective hook parts 13, 14 thereof, the two types I, II of transverse members 1 according to the embodiment thereof as illustrated in figure 4, are identically shaped. However, this is by no means required. To the contrary, it may be advantageous to differentiate further design features of the transverse members 1 between the said two types I, II thereof. For example, the thickness can be differentiated between, i.e. can be set differently for the said two types I, II of transverse members 1. In this case and in particular to attenuate the noise generated by the drive belt during operation in the transmission, it is beneficial to include the said two types I, II of transverse members 1 in the drive belt 50 in an irregular or random order.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

**Claims**

1. A drive belt (3) for a continuously variable transmission with at least one endless carrier (8) and with a number of transverse members (1), which transverse members (1) comprise a base part (10) and two pillar parts (11) that are respectively provided on a respective side of the base part (10) thereof and that define an opening (5) of the transverse members (1) there between, and which transverse members (1) are arranged in a row along the circumference of the endless carrier (8) that is located between the pillar parts (11) thereof, at least a first of the two pillar parts (11) comprising a first hook part (13) that at least partly extends over the endless carrier (8) in the axial direction, whereby the endless carrier (8) is located between such first hook part (13) and the base part (10), with at least two types (I, II) of the transverse members (1-a, 1-b) being included in the drive belt (50), whereof the said first of the two pillar parts (11) that comprises the first hook part (13) is located on respectively opposite sides of the endless carrier (8), while an axial extent A13 of the first hook part (13) relative to a side of the opening (5) defined by the first of the two pillar parts (11) satisfies the requirements that:

$$A5-(A8*R8/R5) > A13 > A5-A8$$

wherein:

- A5 represents the axial dimension of the opening (5) between the two pillar parts (11);
- A8 represents the axial dimension of the endless carrier (8);
- R8 represents the radial dimension of the endless carrier (8); and
- R5 represents the radial dimension of the opening (5) between the first hook part (13) base part (10) of the transverse member (1),

**characterised in that** a second of the two pillar parts (11) comprises a second hook part (14) that extends over the endless carrier to a lesser extent as compared to the said first of the two pillar parts (11) and **in that** an axial extent A14 of this second hook part (14) relative to a side of the opening (5) defined by the second of the two pillar parts (11) satisfies the requirement that:

$$A14 < 0.5*(A5-A8).$$

2. The drive belt according to claim 1, **characterised in that**, an axial extent A13 of the first hook part (13) relative to a side of the opening (5) defined by the first of the two pillar parts (11) additionally satisfies the requirement that:

$$A13 < (A5-A14)-(A8*R8/R5),$$

preferably that:

$$A13 < 0.9*(A5-A14-A8*R8/R5),$$

more preferably that:

$$A13 < 0.75*(A5-A14-A8*R8/R5),$$

3. The drive belt according to a preceding claim, **characterised in that**, the axial dimension A5 of the opening (5) exceeds the axial dimension A8 of the endless carrier (8) by between 0.5 to 1.0 mm and/or **in that** the radial dimension R5 of the opening (5) exceeds the radial dimension R8 of the endless carrier (8) by between 0.1 to 0.25 mm;

4. The drive belt according to a preceding claim, **characterised in that**, the two types (I, II) of transverse members (1-a, 1-b) are of mutually different thickness.

5. The drive belt according to a preceding claim, **characterised in that**, the transverse members (1) thereof are provided with a projection (6) on a front main face (3) and with a recess (7) on a rear main face (2) such that a projection (6) of a first transverse member (1) is, or at least can be, received in the recess (7) of a second transverse member (1) that is adjacent thereto.

6. The drive belt according to a preceding claim, **characterised in that**, the two types (I, II) of transverse members (1-a, 1-b) are alternatingly included therein.

7. The drive belt according to one or more of the claims 1 to 5, **characterised in that**, the two types (I, II) of transverse members (1-a, 1-b) are included therein in an irregular or random order.

**Patentansprüche**

1. Antriebsriemen (3) für ein stufenloses Getriebe mit wenigstens einem Endlosträger (8) und mit einer Reihe von Querelementen (1), wobei die Querelemente (1) ein Basisteil (10) und zwei Säulenteile (11) umfassen, die jeweils auf einer entsprechenden Seite des Basisteils (10) derselben vorgesehen sind und die eine Öffnung (5) der Querelemente (1) zwischen denselben festlegen, und wobei die Querelemente (1) in einer Reihe entlang dem Umfang des Endlosträgers (8) angeordnet sind, der sich zwischen den Säulenteilen (11) derselben befindet, wobei wenigstens ein erstes der zwei Säulenteile (11) ein erstes Hakenteil (13) umfasst, das sich wenigstens zum Teil in der axialen Richtung über den Endlosträger (8) erstreckt, wobei sich der Endlosträger (8) zwischen dem ersten Hakenteil (13) und dem Basisteil (10) befindet, wobei wenigstens zwei Arten (I, II) der Querelemente (1-a, 1-b) in dem Antriebsriemen (50) enthalten sind, wobei sich das erste der zwei Säulenteile (11), das das erste Hakenteil (13) umfasst, auf jeweils gegenüberliegenden Seiten des Endlosträgers (8) befindet, während eine axiale Ausdehnung A13 des ersten Hakenteils (13) relativ zu einer Seite der Öffnung (5), die durch das erste der zwei Säulenteile (11) festgelegt ist, folgende Bedingungen erfüllt:

$$A5-(A8*R8/R5) > A13 > A5-A8$$

wobei:

- A5 für die axiale Abmessung der Öffnung (5) zwischen den zwei Säulenteilen (11) steht,
- A8 für die axiale Abmessung des Endlosträgers (8) steht,
- R8 für die radiale Abmessung des Endlosträgers (8) steht und
- R5 für die radiale Abmessung der Öffnung (5) zwischen dem ersten Hakenteil (13) und dem Basisteil (10) des Querelements (1) steht,

**dadurch gekennzeichnet, dass** ein zweites der zwei Säulenteile (11) ein zweites Hakenteil (14) umfasst, das sich in einer geringeren Ausdehnung als das erste der zwei Säulenteile (11) über den Endlosträger erstreckt, und dass eine axiale Ausdehnung A14 dieses zweiten Hakenteils (14) relativ zu einer Seite der Öffnung (5), die durch das zweite der zwei Säulenteile (11) festgelegt ist, folgende Bedingung erfüllt:

$$A14 < 0,5*(A5-A8).$$

2. Antriebsriemen nach Anspruch 1, **dadurch gekennzeichnet, dass** eine axiale Ausdehnung A13 des ersten Hakenteils (13) relativ zu einer Seite der Öffnung (5), die durch den ersten der zwei Säulenteile (11) festgelegt ist, zusätzlich folgende Bedingung erfüllt:

$$A13 < (A5-A14)-(A8*R8/R5),$$

vorzugsweise folgende Bedingung erfüllt:

$$A13 < 0,9*(A5-A14-A8*R8/R5),$$

insbesondere folgende Bedingung erfüllt:

$$A13 < 0,75*(A5-A14-A8*R8/R5).$$

3. Antriebsriemen nach einem der vorhergehenden Ansprüche, **dadurch gekennzeichnet, dass** die axiale Abmessung A5 der Öffnung (5) um 0,5 bis 1,0 mm größer als die axiale Abmessung A8 des Endlosträgers (8) ist und/oder dass die radiale Abmessung R5 der Öffnung (5) um 0,1 bis 0,25 mm größer als die radiale Abmessung R8 des Endlosträgers (8) ist.

4. Antriebsriemen nach einem der vorhergehenden Ansprüche, **dadurch gekennzeichnet, dass** die beiden Arten (I, II) der Querelemente (1-a, 1-b) eine gegenseitig unterschiedliche Dicke aufweisen.

5. Antriebsriemen nach einem der vorhergehenden Ansprüche, **dadurch gekennzeichnet, dass** die Querelemente (1) desselben mit einem Vorsprung (6) auf einer vorderen Hauptfläche (3) und mit einer Ausnehmung (7) auf einer hinteren Hauptfläche (2) auf eine solche Weise versehen sind, dass ein Vorsprung (6) eines ersten Querelements (1) in der Ausnehmung (7) eines zweiten Querelements (1), das angrenzend an dasselbe gelegen ist, aufgenommen ist oder wenigstens aufgenommen werden kann.

6. Antriebsriemen nach einem der vorhergehenden Ansprüche, **dadurch gekennzeichnet, dass** die beiden Arten (I, II) der Querelemente (1-a, 1-b) abwechselnd in demselben enthalten sind.

7. Antriebsriemen nach einem oder mehreren der Ansprüche 1 bis 5, **dadurch gekennzeichnet, dass** die beiden Arten (I, II) der Querelemente (1-a, 1-b) in einer unregelmäßigen oder zufälligen Reihenfolge enthalten sind.

## Revendications

1. Courroie de transmission (3) pour transmission à variation continue ayant au moins un porte-éléments (8) sans fin et un certain nombre d'éléments transversaux (1), lesquels éléments transversaux (1) comprennent une partie de base (10) et deux parties de pilier (11) qui sont disposées chacune sur un côté respectif de la partie de base (10) et qui délimitent entre elles une ouverture (5) des éléments transversaux (1), et lesquels éléments transversaux (1) sont disposés en rangée le long de la circonférence du porte-éléments (8) sans fin, qui est situé entre les parties de pilier (11) de ceux-ci, au moins une première des deux parties de pilier (11) comprenant une première partie de crochet (13) qui s'étend au moins partiellement sur le porte-éléments (8) sans fin dans la direction axiale, moyennant quoi le porte-éléments (8) sans fin est situé entre une telle première partie de crochet (13) et la partie de base (10), au moins deux types (I, II) d'éléments transversaux (1-a, 1-b) étant compris dans la courroie de transmission (50), desquels ladite première des deux parties de pilier (11) qui comprend la première partie de crochet (13) est située sur des côtés respectivement opposés du porte-éléments (8) sans fin, alors que l'extension axiale A13 de la première partie de crochet (13) par rapport à un côté de l'ouverture (5) délimitée par la première des deux parties de pilier (11) satisfait la condition ci-dessous :

$$A5 - (A8*R8/R5) > A13 > A5-A8$$

dans laquelle :

   - A5 représente la dimension axiale de l'ouverture (5) entre les deux parties de pilier (11) ;
   - A8 représente la dimension axiale du porte-éléments (8) sans fin ;
   - R8 représente la dimension radiale du porte-éléments (8) sans fin ; et
   - R5 représente la dimension radiale de l'ouverture (5) entre la partie de base (10) de la première partie de crochet (13) de l'élément transversal (1),

   **caractérisée en ce que** la seconde des deux parties de pilier (11) comprend une seconde partie de crochet (14) qui s'étend sur le porte-éléments sans fin, dans une moindre mesure par comparaison à ladite première des deux parties de pilier (11) et **en ce que** l'extension axiale A14 de cette seconde partie de crochet (14) par rapport à un côté de l'ouverture (5) délimitée par la seconde des deux parties de pilier (11) satisfait la condition ci-dessous :

$$A14 < 0.5*(A5-A8).$$

2. Courroie de transmission selon la revendication 1, **caractérisée en ce que** l'extension axiale A13 de la première partie de crochet (13) par rapport à un côté de l'ouverture (5) délimitée par la première des deux parties de pilier (11) satisfait de plus la condition ci-dessous :

$$A13 < (A5-A14) - (A8*R8/R5),$$

de préférence la condition :

$$A13 < 0.9*(A5-A14-A8*R8/R5),$$

de préférence encore la condition :

$$A13 < 0.75*(A5-A14-A8*R8/R5).$$

3. Courroie de transmission selon l'une des revendications précédentes, **caractérisée en ce que** la dimension axiale A5 de l'ouverture (5) est supérieure à la dimension axiale A8 du porte-éléments (8) sans fin de 0,5 à 1,0 mm et/ou **en ce que** la dimension radiale R5 de l'ouverture (5) est supérieure à la dimension radiale R8 du porte-éléments (8) sans fin de 0,1 à 0,25 mm.

4. Courroie de transmission selon l'une des revendications précédentes, **caractérisée en ce que** les deux types (I, II) d'éléments transversaux (1-a, 1-b) diffèrent par leur épaisseur respective.

5. Courroie de transmission selon l'une des revendications précédentes, **caractérisée en ce que** ses éléments transversaux (1) sont pourvus d'une saillie (6) sur une face principale avant (3) et d'un évidement (7) sur une face principale arrière (2) de telle sorte qu'une saillie (6) d'un premier élément transversal (1) est, ou au moins peut être, reçue dans l'évidement (7) d'un deuxième élément transversal (1) qui est adjacent au premier.

6. Courroie de transmission selon l'une des revendications précédentes, **caractérisée en ce que** les deux types (I, II) d'éléments transversaux (1-a, 1-b) y sont intégrés en alternance.

7. Courroie de transmission selon une ou plusieurs des revendications 1 à 5, **caractérisée en ce que** les deux types (I, II) d'éléments transversaux (1-a, 1-b) y sont intégrés dans un ordre irrégulier ou aléatoire.

**FIG. 1**

**FIG. 2**

**FIG. 3**

Type I

Type II

**FIG. 4**

**FIG. 5**

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1219860 A
- EP 0014013 A
- JP 2002195352 A
- EP 0026534 A
- JP 2138533 B
- US 4604082 A
- JP S58109748 A